# EUROPEAN PATENT SPECIFICATION

(11) **EP 4 257 424 B1**
(45) Date of publication and mention of the grant of the patent: **12.06.2024**
(21) Application number: 23152911.6
(22) Date of filing: 23.01.2023
(51) Int. Cl.: B60N 2/56, B60N 2/58

(54) **VEHICLE SEAT STRUCTURE AND MANUFACTURING METHOD THEREFOR**
FAHRZEUGSITZSTRUKTUR UND HERSTELLUNGSVERFAHREN DAFÜR
STRUCTURE DE SIÈGE DE VÉHICULE ET SON PROCÉDÉ DE FABRICATION

(30) Priority: 30.03.2022 JP 2022056674
(43) Date of publication of application: 11.10.2023
(73) Proprietor: Suzuki Motor Corporation, Hamamatsu-shi, Shizuoka 432-8611 (JP)
(72) Inventor: KANEKO, Wataru, Hamamatsu-shi, Shizuoka 432-8611 (JP); MASUDA, Satoshi, Hamamatsu-shi, Shizuoka 432-8611 (JP)
(74) Representative: Haseltine Lake Kempner LLP

(56) References cited:
- JP-A- 2013 100 000
- US-A1- 2002 096 915
- US-A1- 2007 107 440

## Description

### [Technical Field]

The present invention relates to a vehicle seat structure and to a manufacturing method therefor.

### [Background Art]

Conventionally, as seats used in vehicles such as automobiles, a seat with an air conditioning function that is capable of conditioning air around a seating surface of a seating part and a seating surface of a seatback is known. In the vehicle seat with the air conditioning function, a highly-breathable surface material is used in the seating surface, and a flow path (circulation space) for circulating air between the seating surface and a blower apparatus (fan) is formed on the inside of a cushion member covered with the surface material. When the flow path has a complicated shape, the following may be performed. Specifically, when the cushion member is manufactured by causing a foaming material to foam, a part of a wall surface for forming the flow path is formed by the cushion member, and the remaining wall surface is prepared as a member different from the cushion member. When the vehicle seat is manufactured, the remaining wall surface is fixed to the cushion member. As a result, the flow path is formed in the cushion member.

For example, in Patent Literature 1, a flow path part opened to the rear side and a recessed part that surrounds the flow path part are formed in a back surface of the cushion member, and an adhesive agent is placed in a heaped state in the recessed part. Then, a lid member is adhesively fixed to the back surface of the cushion member while being overlapped on the back surface of the cushion member. As a result, the flow path part is covered. As a result, the adhesive agent is solidified in the recessed part in a bolt-like form, and the relative movement of the lid member with respect to the cushion member in the surface direction is restricted.

### [Citation List]

### [Patent Literature]

[Patent Literature 1] JP 2013-100000 A

### [Summary of Invention]

### [Problem to be Solved by the Invention]

However, when the adhesive agent is injected to the recessed part formed in the cushion member as in Patent Literature 1 described above, there is a concern that the sectional shape of the recessed part may change when a variation in the depth of the recessed part and the width of the recessed part occurs due to the conditions (for example, the state, the foaming conditions, and the manufacturing environment of the cushion material) at the time of manufacturing of the cushion member and the like. When there is a variation in the sectional shape of the recessed part, there is a concern that the amount of the adhesive agent heaped up in the recessed part may be partially excessive or partially insufficient. There has been a problem in that the excess adhesive agent may flow into the flow path and block the flow of air in parts where the adhesive agent is excessive, and the adhesion of the lid member with respect to the cushion member becomes unstable in parts where the adhesive agent is insufficient.

The present invention has been made in view of the abovementioned point, and an object thereof is to provide a vehicle seat structure and a manufacturing method thereof capable of adhesively fixing a covering material to a flow-path-forming member in a stable manner without blocking the flow of air in a flow path.

### [Means for Solving the Problems]

One aspect of the present invention for achieving the abovementioned object provides a vehicle seat structure including: a blower apparatus that conditions air around a seating surface of a vehicle seat; a flow-path-forming member that forms a flow path that circulates air between the seating surface and the blower apparatus; and a covering material that adheres to the flow-path-forming member and covers an opening part of the flow path. In the vehicle seat structure, the flow-path-forming member has: an adhesion surface to which the covering material adheres via an adhesion layer formed by an adhesive agent; and a first recessed part positioned between the flow path and the adhesion surface and disposed to be adjacent to the adhesion surface. In the vehicle seat structure, the adhesion surface and the first recessed part extend so as to surround the opening part of the flow path, and a center in a cross section of the adhesion layer in a width direction is positioned between both end parts of the adhesion surface in a width direction.

### [Advantageous Effects of Invention]

According to the vehicle seat structure according to the present invention, it becomes possible to release excess adhesive agent to the first recessed part even when sufficient amount of adhesive agent is applied onto the adhesion surface. Therefore, without blocking the flow of air in the flow path, it becomes possible to adhesively fix the covering material to the flow-path-forming member in a stable manner.

### [Brief Description of Drawings]

[Figure 1] Figure 1 is a perspective view showing the external appearance of a vehicle seat structure according to one embodiment of the present invention.
[Figure 2] Figure 2 is an exploded perspective view of a seatback cushion in the embodiment.
[Figure 3] Figure 3 is a perspective view of a flow-path-forming member in the embodiment seen from diagonally behind.
[Figure 4] Figure 4 is a rear view of the flow-path-forming member of Figure 3.
[Figure 5] Figure 5 is a rear view showing a state in which a covering material is adhesively fixed to the flow-path-forming member of Figure 4.
[Figure 6] Figure 6 is a sectional view taken along line A-A of Figure 5.
[Figure 7] Figure 7 is a sectional view taken along line B-B of Figure 5.
[Figure 8] Figure 8 is a sectional view taken along line C-C of Figure 5.
[Figure 9] Figure 9 is a block diagram showing a configuration example of a manufacturing apparatus used in an adhesion step of the covering material in the embodiment.
[Figure 10] Figure 10 is a conceptual diagram describing the adhesion step of the covering material in the embodiment.
[Figure 11] Figure 11 is a sectional view showing a modification relating to the embodiment.
[Figure 12] Figure 12 is a sectional view showing another modification relating to the embodiment.

### [Mode for Carrying Out the Invention]

Description will be given below on a vehicle seat structure and a manufacturing method therefor according to one embodiment of the present invention with reference to the drawings.

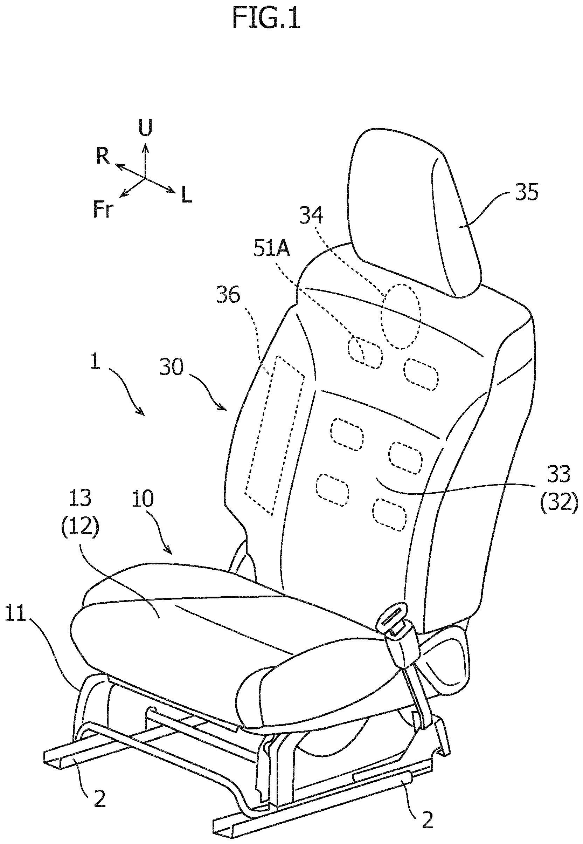

Figure 1 is a perspective view showing the external appearance of a vehicle seat 1 to which a structure according to the present embodiment is applied. Note that, in the drawings described below, arrow Fr indicates the front side in the front-rear direction of the vehicle seat. The "front part (front end) and rear part (rear end)" in the description of the embodiment correspond to the front part and the rear part in the seat front-rear direction. The front side in the seat front-rear direction in the present embodiment corresponds to the front side in the vehicle front-rear direction. The direction of arrow R and the direction of arrow L indicate the right side and the left side when an occupant sits on the vehicle seat. The direction of arrow U indicates the upper side.

In Figure 1, the vehicle seat 1 includes a seating part 10 and a seatback 30.

The seating part 10 is a part on which an occupant sits. The seating part 10 has a seating-part frame 11, a seating-part cushion 12 forming a sitting surface, and a seating-part cover 13 that covers the seating-part cushion 12.

The seating-part frame 11 configures the framework of the seating part 10. Both side portions of a lower part of the seating-part frame 11 in the seat width direction are mounted on left and right seat rails 2 via running parts (not shown) in a movable manner. The seat rails 2 are provided on a floor part (not shown) in a vehicle interior and extend in the vehicle front-rear direction.

The seating-part cushion 12 has an elastic property and is installed on an upper part of the seating-part frame 11. An upper part of the seating-part cushion 12 forms the sitting surface on which an occupant sits.

The seating-part cover 13 is a trim that covers the seating-part cushion 12 from the upper side. The seating-part cover 13 covers the upper part (sitting surface), a front part, a rear part, and both left and right side parts of the seating-part cushion 12.

The seatback 30 is a part that extends to the upper side from a rear part of the seating part 10 and is configured so as to support, in particular, the upper body of the occupant sitting on the seating part 10. The seatback 30 has a seatback frame (not shown) configuring the framework of the seatback 30, a seatback cushion 32 forming the seating surface, a seatback cover 33 that covers the seatback cushion 32, a blower fan 34 that conditions the air around the seating surface, a headrest 35 that supports the head of the occupant sitting on the seating part 10 of the vehicle seat 1, and an airbag apparatus (side airbag) 36 that protects the occupant at the time of a side collision. Note that, in the present embodiment, the blower fan 34 corresponds to a "blower apparatus" of the present invention.

The seatback frame is formed in a substantially rectangular shape by bending a pipe-like member. On an upper part of the seatback frame, a fan-fixing bracket (not shown) is mounted, and the blower fan 34 is fixed via the fan-fixing bracket. In a right side part of the seatback frame, an airbag-fixing bracket (not shown) is mounted, and the airbag apparatus 36 is fixed via the airbag-fixing bracket. The airbag apparatus 36 is disposed on the vehicle-width-direction outer side in the vehicle interior. The seatback cushion 32 is installed in a front part of the seatback frame.

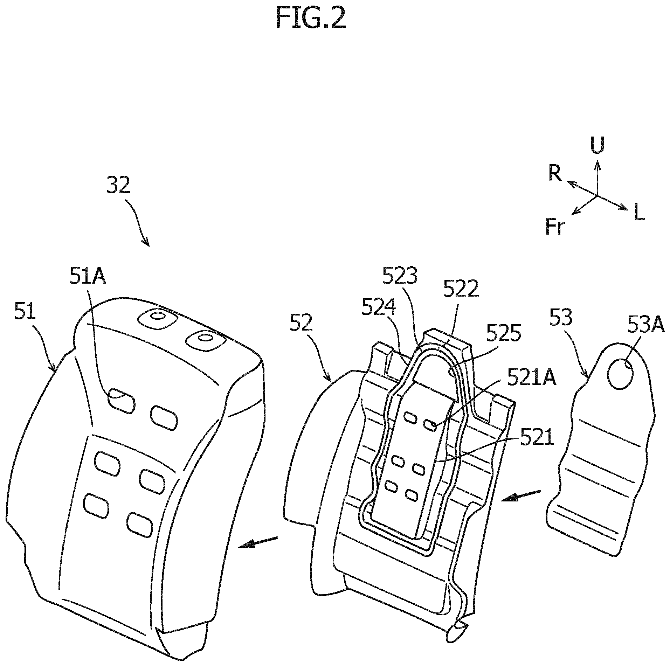

Figure 2 is an exploded perspective view of the seatback cushion 32.

As shown in Figure 2, the seatback cushion 32 has a cushion main-body part 51 having an elastic property, a flow-path-forming member 52 forming a flow path that circulates air between the seating surface and the blower fan 34, and a covering material 53 that covers an opening part of the flow path by adhering to the flow-path-forming member 52. In the seatback cushion 32 according to the present embodiment, a recessed part (not shown) is provided on the rear surface side of the cushion main-body part 51, and the flow-path-forming member 52 that is a body separate from the cushion main-body part 51 is loaded on the recessed part from the seat rear side. The flow path formed by the flow-path-forming member 52 is opened to the seat rear side, and the covering material 53 is adhesively fixed to the flow-path-forming member 52 so as to cover the opening part of the flow path from the seat rear side.

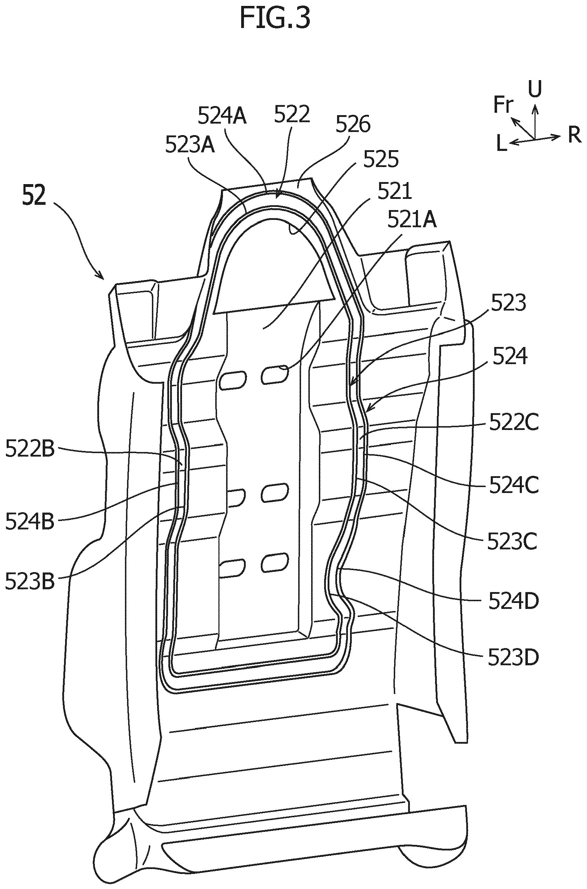

Specifically, a front surface of the cushion main-body part 51 serves as a seating surface (supporting surface) that supports the back of the occupant. On the front surface side of the cushion main-body part 51, a plurality of front blower ports 51A are formed (Figure 1 and Figure 2). Each of the front blower ports 51A communicates with the flow path of air provided on the rear surface side of the cushion main-body part 51, and the air around the seating surface is guided to the blower fan 34 through each of the front blower ports 51A and the flow path or the air from the blower fan 34 is blown to the seating surface through the flow path and each of the front blower ports 51A. In the present embodiment, at least a part of the flow path of air provided on the rear surface side of the cushion main-body part 51 is formed by the flow-path-forming member 52 and the covering material 53. Specific structures of the flow-path-forming member 52 and the covering material 53 are described in detail below with reference also to Figure 3 to Figure 7.

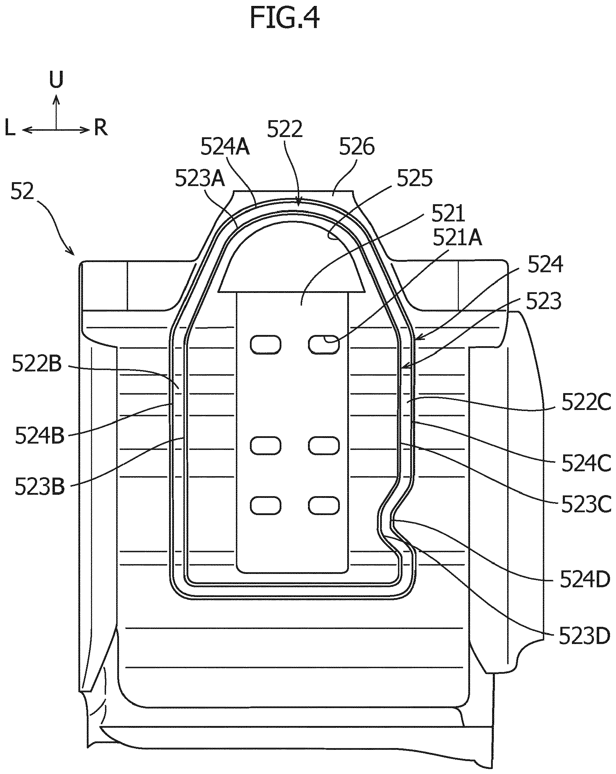

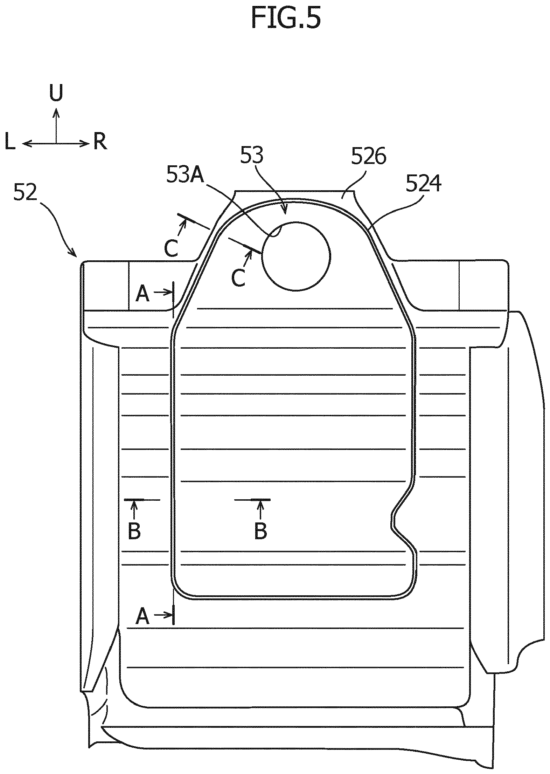

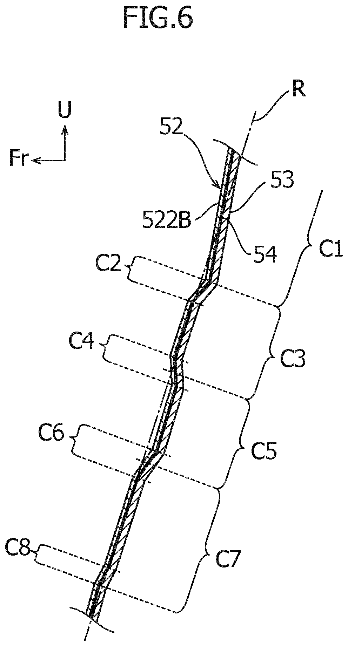

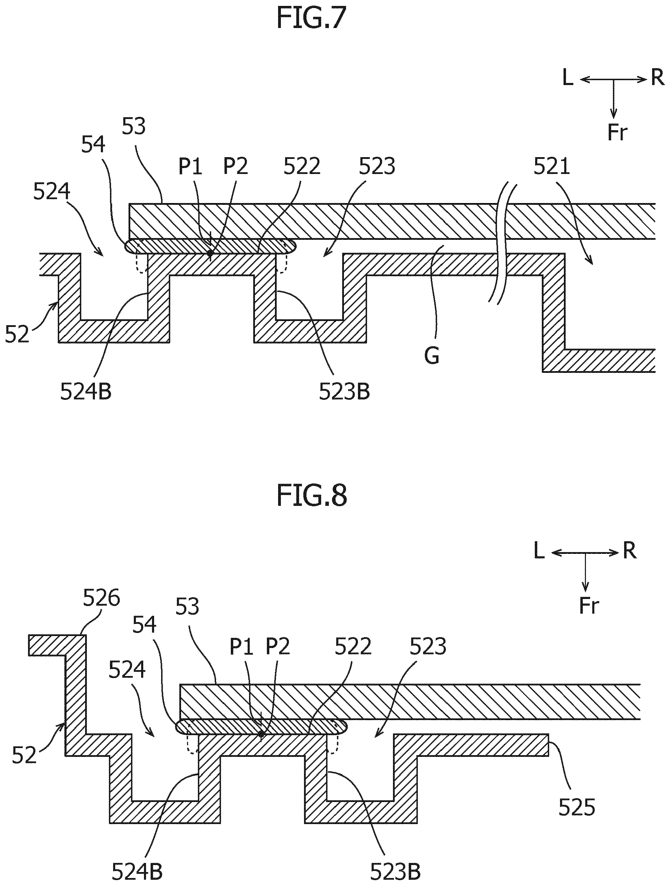

Figure 3 is a perspective view of the flow-path-forming member 52 seen from diagonally behind, and Figure 4 is a rear view of the flow-path-forming member 52 of Figure 3. Figure 5 is a rear view showing a state in which the covering material 53 is adhesively fixed to the flow-path-forming member 52 of Figure 4. Figure 6 is a sectional view taken along line A-A of Figure 5, Figure 7 is a sectional view taken along line B-B of Figure 5, and Figure 8 is a sectional view taken along line C-C of Figure 5.

As shown in Figure 2 to Figure 4, the flow-path-forming member 52 is formed with use of a material harder than that of the cushion main-body part 51 and has an external form corresponding to the recessed part on the rear surface side of the cushion main-body part 51. The flow-path-forming member 52 is in a layer-like form that roughly spreads in the seat up-down direction and the seat width direction and has a plurality of protruding and recessed shapes formed therein in the seat front-rear direction. By combining the flow-path-forming member 52 as above with the cushion main-body part 51, protruding and recessed shapes of the flow path and the like provided on the inside of the seatback cushion 32 can be realized with high accuracy.

In other words, when the protruding and recessed shapes of the flow path and the like are to be directly formed at the time of molding of the cushion main-body part 51 using a foamed material and the like, it may be difficult to accurately realize the protruding and recessed shapes due to the manufacturing conditions in a foaming step and the like of the cushion main-body part 51 and the manufacturing conditions for forming the protruding and recessed shapes with high accuracy being different from each other. Thus, by causing the flow-path-forming member 52 to be a body separate from the cushion main-body part 51, the flow-path-forming member 52 can be manufactured by a step different from that of the cushion main-body part 51; in other words, the protruding and recessed shapes can be formed in the flow-path-forming member 52 without depending on the manufacturing conditions of the cushion main-body part 51. Therefore, highly-accurate protruding and recessed shapes are easily realized. In addition, highly-accurate protruding and recessed shapes can be relatively easily realized by providing the flow-path-forming member 52 made of a material harder than that of the cushion main-body part 51 and forming the protruding and recessed shapes by the flow-path-forming member 52.

In the flow-path-forming member 52 in the present embodiment, a flow path 521 that extends in the seat up-down direction is formed near a central part in the seat width direction. The flow path 521 has a U-like shape in cross section that is recessed to the seat front side (the side of the cushion main-body part 51) and is opened to the seat rear side. In a front wall (bottom part) of the flow path 521, rear blower ports 521A that pass therethrough in the seat front-rear direction are respectively formed in positions corresponding to each of the front blower ports 51A of the cushion main-body part 51.

The flow-path-forming member 52 has an adhesion surface 522 that extends so as to surround the opening part of the flow path 521, and a first recessed part 523 and a second recessed part 524 that are disposed across the adhesion surface 522 and extend along the longitudinal direction of the adhesion surface 522.

The adhesion surface 522 is provided on a surface of the flow-path-forming member 52 facing the seat rear side. The adhesion surface 522 is disposed to be spaced apart from the opening part of the flow path 521 to the outer side of the opening part of the flow path 521 and extends around the opening part of the flow path 521 so as to surround the opening part of the flow path 521. The covering material 53 adheres to the adhesion surface 522 from the seat rear side. An adhesion layer 54 formed by an adhesive agent is formed between the adhesion surface 522 and the covering material 53 (Figure 6 to Figure 8). A fan opening part 525 is provided between an upper-end part of the flow path 521 and an upper part of the adhesion surface 522 in the flow-path-forming member 52. The fan opening part 525 is formed in a substantially semicircular shape when seen from an intersecting direction that intersects with the adhesion surface 522 (in rear view), and the blower fan 34 is inserted through the inside thereof.

The first recessed part 523 is positioned between the flow path 521 and the adhesion surface 522 and is disposed to be adjacent to the adhesion surface 522. In the present embodiment, the first recessed part 523 extends along an edge of the adhesion surface 522 on the flow path 521 side thereof and extends around the opening part of the flow path 521 and the fan opening part 525 so as to surround the opening part of the flow path 521 and the fan opening part 525. The first recessed part 523 has a groove-like shape that is recessed to the seat front side (the side of the cushion main-body part 51) and is opened to the seat rear side. In other words, an outer side wall of the first recessed part 523 positioned on the adhesion surface 522 side thereof is disposed to be adjacent to an inner side edge of the adhesion surface 522 positioned on the flow path 521 side thereof. An inner side wall of the first recessed part 523 positioned on the side opposite from the adhesion surface 522 is disposed to be spaced apart from the opening part of the flow path 521 and the fan opening part 525 to the outer side of each of the opening part of the flow path 521 and the fan opening part 525. The inner side wall of the first recessed part 523 is disposed so as to maintain a fixed interval from the outer side wall of the first recessed part 523.

The second recessed part 524 is positioned on the side opposite from the first recessed part 523 across the adhesion surface 522 and is disposed to be adjacent to the adhesion surface 522. In the present embodiment, the second recessed part 524 extends along an outer side edge of the adhesion surface 522 on the side opposite from the flow path 521 and extends around the opening part of the flow path 521 and the fan opening part 525 so as to surround the opening part of the flow path 521 and the fan opening part 525. The second recessed part 524 has a shape similar to that of the first recessed part 523; in other words, a groove-like shape that is recessed to the seat front side (the side of the cushion main-body part 51) and is opened to the seat rear side. In other words, an inner side wall of the second recessed part 524 positioned on the adhesion surface 522 side thereof is disposed to be adjacent to an outer side edge of the adhesion surface 522. An outer side wall of the second recessed part 524 positioned on the side opposite from the adhesion surface 522 is disposed so as to maintain a fixed interval from the inner side wall of the second recessed part 524.

In the present embodiment, the interval between the first recessed part 523 and the second recessed part 524, in other words, the horizontal width of the adhesion surface 522 is formed to be substantially fixed. When the adhesion surface 522 has a substantially fixed horizontal width as above, it becomes easier to apply the adhesive agent to the adhesion surface 522, and it also becomes easier to maintain the application amount of the adhesive agent to be fixed. Therefore, the adhesive fixation between the adhesion surface 522 and the covering material 53 becomes stable.

As shown in Figure 2 and Figure 5, the covering material 53 is adhesively fixed to the adhesion surface 522 of the flow-path-forming member 52 and covers the opening part of the flow path 521 from the seat rear side. The covering material 53 is formed with use of a cloth-like material with little air permeability (for example, felt and the like). A coupling part 53A to be coupled to the blower fan 34 is provided on an upper part of the covering material 53. The coupling part 53A has a substantially-circular external form in rear view and passes through the covering material 53 in the seat front-rear direction. A rear part of the blower fan 34 inserted through the fan opening part 525 of the flow-path-forming member 52 is coupled to the coupling part 53A.

In a state in which the covering material 53 is caused to adhere to the adhesion surface 522 of the flow-path-forming member 52, the outer side wall of the first recessed part 523 of the flow-path-forming member 52 has a first curved part 523A curved so as to surround the coupling part 53A of the covering material 53 (Figure 3 and Figure 4). The inner side wall of the second recessed part 524 has a second curved part 524A curved so as to surround the coupling part 53A of the covering material 53 in a position corresponding to the first curved part 523A. Therefore, a part of the adhesion surface 522 of the flow-path-forming member 52 adjacent to the first curved part 523A and the second curved part 524A has a shape curved so as to surround the coupling part 53A of the covering material 53.

A raised part 526 is formed in the flow-path-forming member 52 so as to correspond to the second curved part 524A (Figure 3 to Figure 5, and Figure 8). The raised part 526 is positioned on the side opposite from the adhesion surface 522 across the second recessed part 524 and is raised to the seat rear side along the second curved part 524A. In other words, a distal end surface (rear surface) of the raised part 526 is positioned on the seat rear side than the adhesion surface 522 positioned between the first curved part 523A and the second curved part 524A, and a difference in level is formed between the adhesion surface 522 and the distal end surface of the raised part 526 (Figure 8). The difference in level can be used in positioning when the covering material 53 is affixed to the adhesion surface 522 of the flow-path-forming member 52. Note that the raised part 526 may be formed so as to correspond to a part of the inner side wall of the second recessed part 524 other than the second curved part 524A.

The outer side wall of the first recessed part 523 of the flow-path-forming member 52 has left and right first straight parts 523B, 523C that extend in a straight manner when seen from the intersecting direction that intersects with the adhesion surface 522 (in rear view). In the present embodiment, the first straight part 523B on the left side extends in the seat up-down direction on the left side of the flow path 521, and the first straight part 523C on the right side extends in the seat up-down direction on the right side of the flow path 521. Parts out of the inner side wall of the first recessed part 523 that face the first straight parts 523B, 523C also extend in the seat up-down direction in a straight manner.

The inner side wall of the second recessed part 524 of the flow-path-forming member 52 is in a position corresponding to each of the left and right first straight parts 523B, 523C and has left and right second straight parts 524B, 524C that extend in a straight manner when seen from the intersecting direction that intersects with the adhesion surface 522 (in rear view). In the present embodiment, as with the first straight parts 523B, 523C, the second straight parts 524B, 524C extend in the seat up-down direction. Parts out of the outer side wall of the second recessed part 524 that face the second straight parts 524B, 524C also extend in the seat up-down direction in a straight manner.

Each of the lengths of the first straight part 523C and the second straight part 524C on the right side is formed to be shorter than each of the lengths of the first straight part 523B and the second straight part 524C on the left side. In other words, the first straight parts 523B, 523C and the second straight parts 524B, 524C are formed to be bilaterally asymmetrical. In the present embodiment, the outer side wall of the first recessed part 523 has a first bulging part 523D that bulges out to the flow path 521 side (left side) on the lower side of the first straight part 523C on the right side. The inner side wall of the second recessed part 524 has a second bulging part 524D that bulges out to the flow path 521 side (left side) on the lower side of the second straight part 524C on the right side. By providing the first bulging part 523D and the second bulging part 524D as above, the area of the adhesion surface 522 of the flow-path-forming member 52 is increased, and it becomes easier to distinguish the front and back of the covering material 53 from each other when the covering material 53 is affixed to the adhesion surface 522.

The adhesion surface 522 of the flow-path-forming member 52 has a surface-direction changing part 522B on the left side in a part positioned between the first straight part 523B and the second straight part 524B on the left side and has a surface-direction changing part 522C on the right side in a part positioned between the first straight part 523C and the second straight part 524C on the right side. The left and right surface-direction changing parts 522B, 522C are configured such that the direction along the adhesion surface 522 changes to the intersecting direction that intersects with the adhesion surface 522. The intersecting direction that intersects with the adhesion surface 522 corresponds to the adhesion direction of the covering material 53 in a step of causing the covering material 53 to adhere to the adhesion surface 522. For example, a direction orthogonal to the adhesion surface 522 and the like correspond to the intersecting direction. A specific structure of the surface-direction changing part 522B on the left side is described in detail below with reference to Figure 6 (a sectional view taken along line A-A of Figure 5). Note that line A-A in Figure 5 is a straight line that extends along the longitudinal direction through the center of the surface-direction changing part 522B on the left side in the left-right direction. The surface-direction changing part 522C on the right side is similar to the surface-direction changing part 522B on the left side, and hence description here is omitted.

As shown in Figure 6, in the surface-direction changing part 522B on the left side in the adhesion surface 522 of the flow-path-forming member 52, an inclined part C1, a front protruding part C3 (first surface-direction changing part), a rear protruding part C5 (second surface-direction changing part), and a level-difference part C7 are consecutively formed in the seat up-down direction. Note that dash-dot-dash lines in Figure 6 indicate a virtual reference surface R of the adhesion surface 522.

The inclined part C1 is inclined to the seat front side with respect to the reference surface R. An upper end of the front protruding part C3 is connected to a lower end of the inclined part C1.

The front protruding part C3 protrudes to the seat front side and includes a rear-side inclined part C2 on the upper-end side and an upper part of a front-side inclined part C4 on the lower-end side. The rear-side inclined part C2 is inclined to the seat rear side with respect to the reference surface R. The front-side inclined part C4 is inclined to the seat front side with respect to the reference surface R. An upper end of the rear protruding part C5 is connected to a lower end of the front protruding part C3.

The rear protruding part C5 protrudes to the seat rear side and includes a lower part of the front-side inclined part C4 on the upper-end side and an upper part of a rear-side inclined part C6 on the lower-end side. As with the rear-side inclined part C2, the rear-side inclined part C6 is inclined to the seat rear side with respect to the reference surface R. An upper-end of the level-difference part C7 is connected to a lower end of the rear protruding part C5.

The level-difference part C7 is positioned on the seat front side with respect to a bottom surface of the rear protruding part C5 and includes a lower part of the rear-side inclined part C6 on the upper-end side and a rear-side inclined part C8 on the lower-end side. In other words, a difference in level is formed between the bottom surface of the rear protruding part C5 and a surface positioned in the middle of the level-difference part C7 in the seat up-down direction. As with the rear-side inclined part C2, the rear-side inclined part C8 is inclined to the seat rear side with respect to the reference surface R.

The covering material 53 is adhesively fixed to the surface-direction changing part 522B on the left side (and the surface-direction changing part 522C on the right side) as described above via the adhesion layer 54 formed by the adhesive agent described above. Therefore, recessions and protrusions similar to the surface-direction changing parts 522B, 522C are also formed in parts corresponding to the surface-direction changing parts 522B, 522C of the covering material 53. Note that, in the present embodiment, one example in which the surface-direction changing parts 522B, 522C are formed in parts in the adhesion surface 522 positioned between the first straight parts 523B, 523C and the second straight parts 524B, 524C have been described, but the surface-direction changing parts may be formed in other parts of the adhesion surface 522 besides those described above.

As shown in Figure 7 and Figure 8, in the adhesion layer 54 formed between the adhesion surface 522 of the flow-path-forming member 52 and the covering material 53, a center P1 of the cross section in the width direction is positioned between both end parts of the adhesion surface in the width direction. The center P1 of the cross section of the adhesion layer 54 in the width direction in the present embodiment is positioned in a center P2 of the adhesion surface 522 in the width direction between the first recessed part 523 and the second recessed part 524. In other words, the adhesive agent is applied so as to include the part of the center P2 of the adhesion surface 522 in the width direction when the covering material 53 is caused to adhere to the adhesion surface 522 of the flow-path-forming member 52. Note that line B-B of Figure 5 corresponds to a straight line that cuts across the surface-direction changing part 522B on the left side in the adhesion surface 522 in the left-right direction (seat-width rear side). By applying the adhesive agent to the adhesion surface 522 as above, even when the application amount of the adhesive agent is excessive, the excess adhesive agent flows into the first recessed part 523 and/or the second recessed part 524 (the dotted line part in Figure 7). Therefore, a case in which the excess adhesive agent flows into the flow path 521 in a position spaced apart from the first recessed part 523 and blocks the flow of air is avoided.

When the adhesion layer 54 as described above is interposed between the adhesion surface 522 and the covering material 53, a communicating space G that communicates with the space in the flow path 521 and the space in the first recessed part 523 is formed (Figure 7). By the communicating space G as above, the circulation space of the air can be expanded, and hence, the amount of air blown by the blower fan 34 can be increased. In addition, the communicating space G is formed in a section equivalent to the adhesion surface, and hence, the section can be deformed in the arrangement direction of the first and second recessed parts 523, 524 (the width direction of the adhesion surface 522). As a result, a case in which excessive pressure (negative pressure or positive pressure) acts on a place between the adhesion surface 522 and the covering material 53 and the adhesion state becomes unstable, can be suppressed.

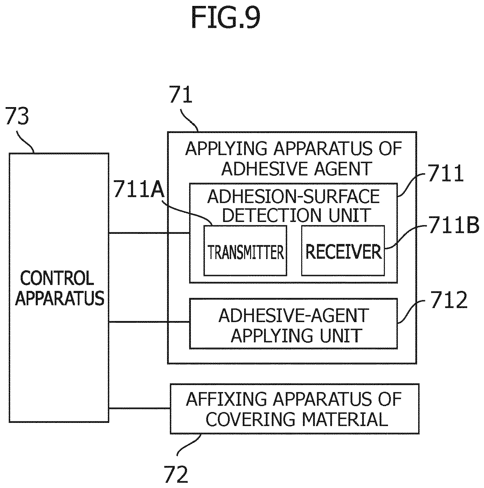

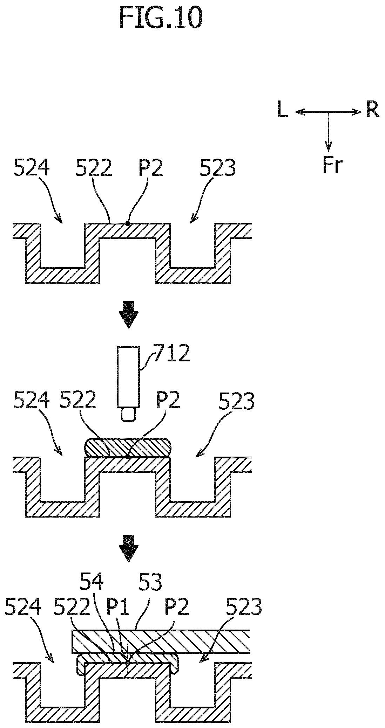

One specific example of the step of causing the covering material 53 to adhere to the adhesion surface 522 of the flow-path-forming member 52 in the manufacturing of the vehicle seat 1 according to the present embodiment is described in detail with reference to Figure 9 and Figure 10. Figure 9 is a block diagram showing a configuration example of a manufacturing apparatus used in the adhesion step of the covering material 53. Figure 10 is a conceptual diagram describing the adhesion step of the covering material 53.

As shown in Figure 9, for example, the manufacturing apparatus used in the adhesion step of the covering material 53 includes an applying apparatus 71 of the adhesive agent, an affixing apparatus 72 of the covering material 53, and a control apparatus 73 that controls the operation of the applying apparatus 71 and the affixing apparatus 72.

The applying apparatus 71 of the adhesive agent has an adhesion-surface detection unit 711 that detects the position of the adhesion surface 522 of the flow-path-forming member 52, and an adhesive-agent applying unit 712 that applies the adhesive agent to the adhesion surface 522 detected by the adhesion-surface detection unit 711. In the applying apparatus 71, each processing of the manufacturing step as described below is performed by executing a preset program.

The adhesion-surface detection unit 711 includes a transmitter 711A that transmits detection waves for detecting the adhesion surface 522 toward the flow-path-forming member 52, and a receiver 711B that receives the detection waves reflected by the flow-path-forming member 52. As the detection waves output from the transmitter 711A, for example, sound, light (a visible light ray or an invisible light ray), electromagnetic waves, and the like can be used. In the adhesion-surface detection unit 711, each of the positions of the first recessed part 523 and the second recessed part 524 of the flow-path-forming member 52 is detected on the basis of the waveform change of the detection waves received by the receiver 711B, and adhesion surface information including the position and the shape of the adhesion surface 522 is generated in accordance with the detection result thereof. The adhesion surface information is transmitted from the adhesion-surface detection unit 711 to the adhesive-agent applying unit 712 (the state shown in the upper stage of Figure 10).

In processing for detecting the adhesion surface 522 by the adhesion-surface detection unit 711 described above, the adhesion surface 522 is formed between the first recessed part 523 and the second recessed part 524, and hence, the degree of reflection of the detection waves can be changed between the first recessed part 523 and the second recessed part 524, and the adhesion surface 522. Therefore, the position and the shape of the adhesion surface 522 can be easily detected with high accuracy on the basis of the waveform change of the detection waves received by the receiver 711B.

The adhesive-agent applying unit 712 applies the adhesive agent to the adhesion surface 522 of the flow-path-forming member 52 on the basis of the adhesion surface information from the adhesion-surface detection unit 711. At this time, the adhesive agent is applied so as to include the center P2 of the adhesion surface 522 in the width direction (the state shown in the middle stage in Figure 10). The application amount of the adhesive agent to the adhesion surface 522 and the like are controlled in accordance with an output signal from the control apparatus 73. Note that the applying range of the adhesive agent may include the second recessed part 524 beyond the adhesion surface 522. However, the adhesive agent is preferably not applied on the first recessed part 523.

The affixing apparatus 72 affixes the covering material 53 at a predetermined position on the adhesion surface 522 of the flow-path-forming member 52 to which the adhesive agent is applied by the applying apparatus 71. The position to which the covering material 53 is affixed and the like are controlled in accordance with an output signal from the control apparatus 73. The covering material 53 affixed to a predetermined position in the flow-path-forming member 52 by the affixing apparatus 72 is pressed to the side of the adhesion surface 522. At this time, the excess adhesive agent flows into the first recessed part 523 and/or the second recessed part 524. The covering material 53 is adhesively fixed to the adhesion surface 522 of the flow-path-forming member 52 via the adhesion layer 54 when the adhesive agent solidifies. At this time, the center P1 of the cross section of the adhesion layer 54 in the width direction overlaps on the center P2 of the adhesion surface 522 in the width direction (the state shown in the lower stage in Figure 10).

As described above, in the vehicle seat 1 according to the present embodiment, regarding the flow-path-forming member 52, the first recessed part 523 positioned between the flow path 521 and the adhesion surface 522 and disposed to be adjacent to the adhesion surface 522 is provided, the adhesion surface 522 and the first recessed part 523 extend so as to surround the opening part of the flow path 521, and the center P1 in the cross section of the adhesion layer 54 in the width direction is positioned between both end parts of the adhesion surface 522 in the width direction. By the structure as above, the following occurs when the covering material 53 is affixed to the adhesion surface 522. Even when the application amount of the adhesive agent on the adhesion surface 522 becomes excessive the excess adhesive agent can be released to the first recessed part 523. As a result, a case in which the adhesive agent flows into the flow path 521 and blocks the flow of air can be prevented, and adhesive fixation of the covering material 53 to the adhesion surface 522 by a sufficient application amount of the adhesive agent can be stabilized.

In the flow-path-forming member 52 of the vehicle seat 1 according to the present embodiment, the second recessed part 524 that is positioned on the side opposite from the first recessed part 523 across the adhesion surface 522, is disposed to be adjacent to the adhesion surface 522, and extends so as to surround the opening part of the flow path 521, is provided. In the structure as above, the abovementioned excess adhesive agent can be released to the first recessed part 523 and/or the second recessed part 524, and hence, the adhesive fixation of the covering material 53 to the adhesion surface 522 can be further stabilized. In addition, the covering material 53 can be affixed to a desired position in the flow-path-forming member 52 by using the first recessed part 523 and the second recessed part 524 as a guide, and hence, the operation of affixing the covering material 53 can be easily performed.

In the vehicle seat 1 according to the present embodiment, the center P1 in the cross section of the adhesion layer 54 in the width direction is positioned in the center P2 of the adhesion surface 522 in the width direction. As a result, the abovementioned excess adhesive agent can be easily released to the first recessed part 523 and/or the second recessed part 524, and hence, the adhesion of the covering material 53 to the adhesion surface 522 can be further stabilized.

In the vehicle seat 1 according to the present embodiment, the covering material 53 has the coupling part 53A coupled to the blower fan 34, and the outer side wall of the first recessed part 523 positioned on the adhesion surface 522 side thereof has the first curved part 523A curved so as to surround the coupling part of the covering material 53. In the structure as above, the pressure (negative pressure or positive pressure) that acts on the adhesion surface 522 of the flow-path-forming member 52 when the blower fan 34 is driven is accepted by the entirety of the part of the adhesion surface 522 adjacent to the first curved part 523A, and local concentration of the pressure onto the adhesion surface 522 can be suppressed. As a result, the adhesively fixed state between the adhesion surface 522 of the flow-path-forming member 52 and the covering material 53 is easily maintained even when the blower fan 34 is used for a long period of time.

In the vehicle seat 1 according to the present embodiment, the inner side wall of the second recessed part 524 positioned on the adhesion surface 522 side thereof has the second curved part 524A curved so as to surround the coupling part 53A of the covering material 53 in a position corresponding to the first curved part 523A of the first recessed part 523, and the flow-path-forming member 52 has the raised part 526 positioned on the side opposite from the adhesion surface 522 across the second recessed part 524 and raised along the second curved part 524A. By providing the raised part 526 raised along the longitudinal direction of the adhesion surface 522 as above, the movement amount of the covering material 53 is restricted along the raised part 526 when the covering material 53 is affixed to the adhesion surface 522 of the flow-path-forming member 52. Therefore, the alignment of the covering material 53 can be easily and accurately performed. Therefore, the adhesion of the covering material 53 to the adhesion surface 522 can be stabilized even more. In addition, the pressure (negative pressure or positive pressure) generated near the coupling part 53A of the covering material 53 at the time of driving of the blower fan 34 is accepted by the entirety of the part of the adhesion surface 522 that is adjacent to both of the first curved part 523A and the second curved part 524A, and hence, local concentration of the pressure onto the adhesion surface 522 can also be effectively suppressed. As a result, the adhesively fixed state between the adhesion surface 522 of the flow-path-forming member 52 and the covering material 53 is further easily maintained even when the blower fan 34 is used for a long period of time.

In the vehicle seat 1 according to the present embodiment, the adhesion surface 522 of the flow-path-forming member 52 has the surface-direction changing parts 522B, 522C between the first straight parts 523B, 523C of the outer side wall of the first recessed part 523 and the second straight parts 524B, 524C of the inner side wall of the second recessed part 524. The surface-direction changing parts 522B, 522C are configured such that the direction along the adhesion surface 522 changes to the intersecting direction that intersects with the adhesion surface 522. By forming the surface-direction changing parts 522B, 522C as above in the adhesion surface 522, the adhesion area can be increased. Therefore, the adhesive fixation of the covering material 53 to the adhesion surface 522 can be stabilized more. When the covering material 53 receives a load in the longitudinal direction (seat up-down direction) of the surface-direction changing parts 522B, 522C, the load can be accepted by the surface-direction changing parts 522B, 522C. Therefore, deformation of the covering material 53 after the adhesion can be suppressed, and breakage and the like of the adhesion layer 54 can be suppressed. In particular, the surface-direction changing parts 522B, 522C have the front protruding part C3 and the rear protruding part C5 protruding or recessed in the intersecting direction. When the front protruding part C3 and the rear protruding part C5 are disposed to be adjacent to each other, the stability of the adhesive fixation can be increased even more, and the deformation of the covering material 53 after the adhesion can be reliably suppressed.

In the vehicle seat 1 according to the present embodiment, the covering material 53 is caused to adhere to the adhesion surface 522 such that the external form of the covering material 53 is positioned between the inner side wall and the outer side wall of the second recessed part 524. In the structure as above, the second recessed part 524 is not covered with the covering material 53 even after the covering material 53 is affixed to the adhesion surface 522. Therefore, when the covering material 53 is affixed to the adhesion surface 522, the covering material 53 can be caused to approach the adhesion surface 522 by using the second recessed part 524 as a guide. Therefore, the covering material 53 can be reliably affixed to a desired position in the flow-path-forming member 52, and the operation of affixing the covering material 53 can be easily performed.

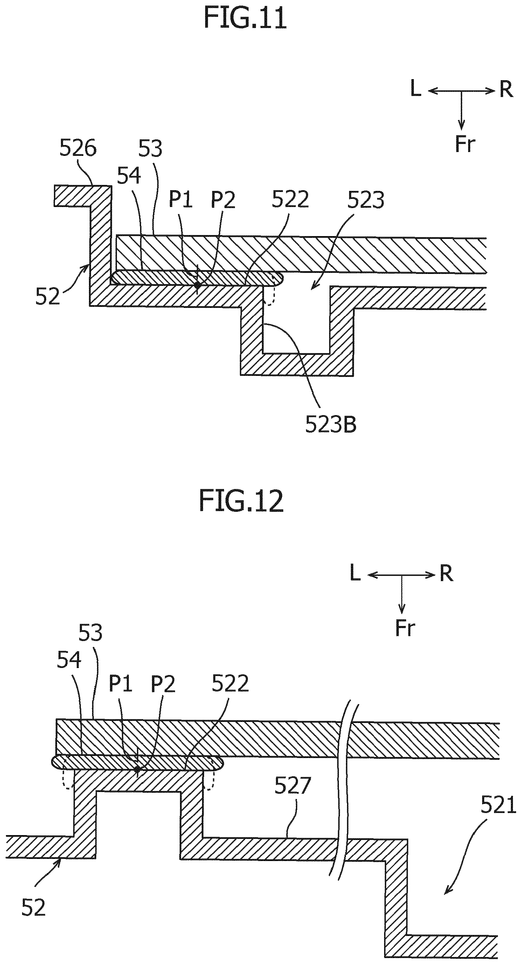

Although the embodiment of the present invention has been described above, the present invention is not limited to the embodiment described above, and various modifications and changes can be made on the basis of the technical idea of the present invention. For example, in the abovementioned embodiment, regarding the flow-path-forming member 52, a case in which the first recessed part 523 and the second recessed part 524 are provided across the adhesion surface 522 has been described. However, as in a modification shown in a sectional view of Figure 11, a structure in which only the first recessed part 523 is provided is also possible. In this modification, the raised part 526 is formed on the side opposite from the first recessed part 523 across the adhesion surface 522. As in another modification shown in a sectional view of Figure 12, a structure in which the adhesion surface 522 is raised to the seat rear side with respect to a surface 527 in the flow-path-forming member 52 connected to an upper end of a side wall of the flow path 521 is also possible. In this modification, the surface 527 of the flow-path-forming member 52 is equivalent to the bottom surface of the first recessed part 523 in the abovementioned embodiment.

In the abovementioned embodiment, one example in which the flow-path-forming member 52 is provided as a body separate from the cushion main-body part 51 has been described, but a cushion member itself can serve as the flow-path-forming member when protruding, and recessed shapes of the flow path and the like can be formed in the cushion member with high accuracy. In the abovementioned embodiment, a case in which a material harder than that of the cushion main-body part 51 is used for the material of the flow-path-forming member 52 has been described, but the same material as the cushion main-body part 51 may be used. In this case, the flow-path-forming member 52 can be formed such that the flow-path-forming member 52 has a property with lower elasticity or higher rigidity than a front surface of the cushion main-body part 51.

In the abovementioned embodiment, one example in which the blower fan 34 is disposed on the upper part of the seatback 30 has been shown, but the seat structure of the present invention is effective when the blower fan 34 is disposed in a freely-selected position in the seatback 30 or the seating part 10. One example in which the covering material 53 is affixed to the adhesion surface 522 of the flow-path-forming member 52 with use of the affixing apparatus 72 has been described, but the operation of affixing the covering material 53 may be manually performed.

### [Reference Signs List]

1 Vehicle seat
10 Seating part
30 Seatback
32 Seatback cushion
33 Seatback cover
34 Blower fan (blower apparatus)
51 Cushion main-body part
51A Front blower port
52 Flow-path-forming member
521 Flow path
522 Adhesion surface
522B, 522C Surface-direction changing part
523 First recessed part
523A First curved part
523B, 523C First straight part
523D First bulging part
524 Second recessed part
524A Second curved part
524B, 523C Second straight part
524D Second bulging part
525 Fan opening part
526 Raised part
53 Covering material
53A Coupling part
54 Adhesion layer
71 Applying apparatus
711 Adhesion-surface detection unit
711A Transmitter
711B Receiver
712 Adhesive-agent applying unit
72 Affixing apparatus
73 Control apparatus
C3 Front protruding part (first surface-direction changing part)
C5 Rear protruding part (second surface-direction changing part)
G Communicating space
P1 Center of adhesion layer
P2 Center of adhesion surface

## Claims

1. A vehicle seat structure, comprising:
a blower apparatus (34) that conditions air around a seating surface of a vehicle seat (1);
a flow-path-forming member (52) that forms a flow path (521) that circulates air between the seating surface and the blower apparatus (34); and
a covering material (53) that adheres to the flow-path-forming member (52) and covers an opening part of the flow path (521),
the flow-path-forming member (52) including:
an adhesion surface (522) to which the covering material (53) adheres via an adhesion layer (54) formed by an adhesive agent; and
a first recessed part (523) positioned between the flow path (521) and the adhesion surface (522) and disposed to be adjacent to the adhesion surface (522);
**characterized in that**:
the adhesion surface (522) and the first recessed part (523) extend so as to surround the opening part of the flow path (521); and
a center in a cross section of the adhesion layer (54) in a width direction is positioned between both end parts of the adhesion surface (522) in a width direction.

2. The vehicle seat structure according to claim 1,
wherein the flow-path-forming member (52) has a second recessed part (524), the second recessed part (524) being positioned on a side opposite from the first recessed part (523) across the adhesion surface (522), disposed to be adjacent to the adhesion surface (522), and extending so as to surround the opening part of the flow path (521).

3. The vehicle seat structure according to claim 2,
wherein the center of the adhesion layer (54) is positioned in a center of the adhesion surface (522) between the first recessed part (523) and the second recessed part (524) in the width direction.

4. The vehicle seat structure according to claim 2,
wherein the covering material (53) has a coupling part (53A) coupled to the blower apparatus (34), and
wherein an outer side wall of the first recessed part (523) positioned on the adhesion surface (522) side of the first recessed part (523) has a first curved part (523A) curved so as to surround the coupling part (53A) of the covering material (53).

5. The vehicle seat structure according to claim 4,
wherein an inner side wall of the second recessed part (524) positioned on the adhesion surface (522) side of the second recessed part (524) has, in a position corresponding to the first curved part (523A), a second curved part (524A) curved so as to surround the coupling part (53A) of the covering material (53), and
wherein the flow-path-forming member (52) has a raised part (526) positioned on a side opposite from the adhesion surface (522) across the second recessed part (524) and raised along the second curved part (524A).

6. The vehicle seat structure according to claim 5,
wherein the outer side wall of the first recessed part (523) has a first straight part (523B, 523C) that extends in a straight manner when seen from an intersecting direction that intersects with the adhesion surface (522),
wherein the inner side wall of the second recessed part (524) has a second straight part (524B, 524C) that is disposed in a position corresponding to the first straight part (523B, 523C) and extends in a straight manner when seen from the intersecting direction, and
wherein the adhesion surface (522) has a surface-direction changing part positioned between the first straight part (523B, 523C) and the second straight part (524B, 524C) and configured such that a direction along the adhesion surface (522) changes to the intersecting direction.

7. The vehicle seat structure according to claim 2,
wherein an outer side wall of the first recessed part (523) positioned on the adhesion surface (522) side of the first recessed part (523) has a first straight part (523B, 523C) that extends in a straight manner when seen from an intersecting direction that intersects with the adhesion surface (522),
wherein an inner side wall of the second recessed part (524) positioned on the adhesion surface (522) side of the second recessed part (524) has a second straight part (524B, 524C) that is in a position corresponding to the first straight part (523B, 523C) and extends in a straight manner when seen from the intersecting direction,
wherein the adhesion surface (522) has a surface-direction changing part (522B, 522C) positioned between the first straight part (523B, 523C) and the second straight part (524B, 524C) and configured such that a direction along the adhesion surface (522) changes to the intersecting direction, and
wherein the surface-direction changing part (522B, 522C) has a part that protrudes or is recessed in the intersecting direction.

8. The vehicle seat structure according to claim 7,
wherein the surface-direction changing part (522B, 522C) includes:
a first surface-direction changing part (C3) that protrudes to one side of the intersecting direction; and
a second surface-direction changing part (C5) that is disposed to be adjacent to the first surface-direction changing part and protrudes to another side of the intersecting direction.

9. The vehicle seat structure according to claim 2,
wherein the covering material (53) is caused to adhere to the adhesion surface (522) such that an external form of the covering material (53) is positioned between an inner side wall in the second recessed part (524) positioned on the adhesion surface (522) side and an outer side wall in the second recessed part (524) positioned on a side opposite from the adhesion surface (522).

10. The vehicle seat structure according to claim 1,
wherein the adhesion surface (522) has a surface-direction changing part (522B, 522C) configured such that a direction along the adhesion surface (522) changes to an intersecting direction that intersects with the adhesion surface (522).

11. The vehicle seat structure according to claim 1,
wherein the flow-path-forming member (52) has a raised part (526) positioned on a side opposite from the first recessed part (523) across the adhesion surface (522) and raised along a longitudinal direction of the adhesion surface (522).

12. A manufacturing method of the vehicle seat structure according to claim 1, the manufacturing method comprising:
a step of transmitting a detection wave for detecting the adhesion surface (522) toward the flow-path-forming member (52);
a step of receiving the detection wave reflected by the flow-path-forming member (52);
a step of generating adhesion surface information including a position and a shape of the adhesion surface (522) on a basis of a waveform change of the received detection wave; and
a step of applying an adhesive agent to the adhesion surface (522) on a basis of the generated adhesion surface information.

13. A program for causing an applying apparatus (71) of the adhesive agent to execute the manufacturing method of the vehicle seat structure according to claim 12.

## Patentansprüche

1. Fahrzeugsitzstruktur, umfassend:
eine Gebläsevorrichtung (34), die die Luft um eine Sitzfläche eines Fahrzeugsitzes (1) herum klimatisiert;
ein strömungswegbildendes Element (52), das einen Strömungsweg (521) bildet, der Luft zwischen der Sitzfläche und der Gebläsevorrichtung (34) zirkulieren lässt; und
ein Abdeckmaterial (53), das an dem strömungswegbildenden Element (52) haftet und einen Öffnungsteil des Strömungswegs (521) abdeckt,
das strömungswegbildende Element (52), beinhaltend:
eine Haftfläche (522), an der das Abdeckmaterial (53) über eine durch ein Haftmittel gebildete Haftschicht (54) haftet; und
einen ersten vertieften Teil (523), der zwischen dem Strömungsweg (521) und der Haftfläche (522) positioniert und so angeordnet ist, dass er an die Haftfläche (522) angrenzt;
**dadurch gekennzeichnet, dass**:
die Haftfläche (522) und der erste vertiefte Teil (523) um den Öffnungsteil des Strömungswegs (521) herum verlaufen; und
eine Mitte in einem Querschnitt der Haftschicht (54) in einer Breitenrichtung zwischen beiden Endteilen der Haftfläche (522) in einer Breitenrichtung positioniert ist.

2. Fahrzeugsitzstruktur nach Anspruch 1,
wobei das strömungswegbildende Element (52) einen zweiten vertieften Teil (524) aufweist, wobei der zweite vertiefte Teil (524) auf einer dem ersten vertieften Teil (523) gegenüberliegenden Seite über die Haftfläche (522) hinweg positioniert ist, so angeordnet, dass er an die Haftfläche (522) angrenzt, und so verlaufend, dass er den Öffnungsteil des Strömungswegs (521) umgibt.

3. Fahrzeugsitzstruktur nach Anspruch 2,
wobei die Mitte der Haftschicht (54) in einer Mitte der Haftfläche (522) zwischen dem ersten vertieften Teil (523) und dem zweiten vertieften Teil (524) in der Breitenrichtung positioniert ist.

4. Fahrzeugsitzstruktur nach Anspruch 2,
wobei das Abdeckmaterial (53) einen Kopplungsteil (53A) aufweist, der mit der Gebläsevorrichtung (34) gekoppelt ist, und
wobei eine äußere Seitenwand des ersten vertieften Teils (523), die auf der Seite der Haftfläche (522) des ersten vertieften Teils (523) positioniert ist, einen ersten gekrümmten Teil (523A) aufweist, der so gekrümmt ist, dass er den Kopplungsteil (53A) des Abdeckmaterials (53) umgibt.

5. Fahrzeugsitzstruktur nach Anspruch 4,
wobei eine innere Seitenwand des zweiten vertieften Teils (524), die auf der Seite der Haftfläche (522) des zweiten vertieften Teils (524) positioniert ist, an einer Position, die dem ersten gekrümmten Teil (523A) entspricht, einen zweiten gekrümmten Teil (524A) aufweist, der so gekrümmt ist, dass er den Kopplungsteil (53A) des Abdeckmaterials (53) umgibt, und
wobei das strömungswegbildende Element (52) einen erhöhten Teil (526) aufweist, der auf einer der Haftfläche (522) gegenüberliegenden Seite über dem zweiten vertieften Teil (524) positioniert und entlang dem zweiten gekrümmten Teil (524A) erhöht ist.

6. Fahrzeugsitzstruktur nach Anspruch 5,
wobei die äußere Seitenwand des ersten vertieften Teils (523) einen ersten geraden Teil (523B, 523C) aufweist, der betrachtet aus einer Schnittrichtung, die die Haftfläche (522) schneidet, gerade verläuft,
wobei die innere Seitenwand des zweiten vertieften Teils (524) einen zweiten geraden Teil (524B, 524C) aufweist, der an einer Position angeordnet ist, die dem ersten geraden Teil (523B, 523C) entspricht und betrachtet aus der Schnittrichtung gerade verläuft, und
wobei die Haftfläche (522) einen die Flächenrichtung ändernden Teil aufweist, der zwischen dem ersten geraden Teil (523B, 523C) und dem zweiten geraden Teil (524B, 524C) positioniert ist und so ausgelegt ist, dass sich eine Richtung entlang der Haftfläche (522) in die Schnittrichtung ändert.

7. Fahrzeugsitzstruktur nach Anspruch 2,
wobei eine äußere Seitenwand des ersten vertieften Teils (523), die an der Seite der Haftfläche (522) des ersten vertieften Teils (523) positioniert ist, einen ersten geraden Teil (523B, 523C) aufweist, der betrachtet aus einer Schnittrichtung, die die Haftfläche (522) schneidet, gerade verläuft,
wobei eine innere Seitenwand des zweiten vertieften Teils (524), die an der Seite der Haftfläche (522) des zweiten vertieften Teils (524) positioniert ist, einen zweiten geraden Teil (524B, 524C) aufweist, der an einer Position angeordnet ist, die dem ersten geraden Teil (523B, 523C) entspricht und betrachtet aus der Schnittrichtung gerade verläuft,
wobei die Haftfläche (522) einen die Flächenrichtung ändernden Teil (522B, 522C) aufweist, der zwischen dem ersten geraden Teil (523B, 523C) und dem zweiten geraden Teil (524B, 524C) positioniert ist und derart ausgelegt ist, dass sich eine Richtung entlang der Haftfläche (522) in die Schnittrichtung ändert, und
wobei der die Flächenrichtung ändernde Teil (522B, 522C) einen Teil aufweist, der in Schnittrichtung hervorsteht oder vertieft ist.

8. Fahrzeugsitzstruktur nach Anspruch 7,
wobei der die Flächenrichtung ändernde Teil (522B, 522C) Folgendes beinhaltet:
einen ersten die Flächenrichtung ändernden Teil (C3), der auf einer Seite der Schnittrichtung hervorsteht; und
einen zweiten die Flächenrichtung ändernden Teil (C5), der neben dem ersten die Flächenrichtung ändernden Teil angeordnet ist und auf der anderen Seite der Schnittrichtung hervorsteht.

9. Fahrzeugsitzstruktur nach Anspruch 2,
wobei das Abdeckmaterial (53) an der Haftfläche (522) zum Anhaften gebracht wird, derart, dass eine Außenform des Abdeckmaterials (53) zwischen einer inneren Seitenwand im zweiten vertieften Teil (524), die auf der Seite der Haftfläche (522) positioniert ist, und einer äußeren Seitenwand im zweiten vertieften Teil (524), die auf einer der Haftfläche (522) gegenüberliegenden Seite positioniert ist, positioniert ist.

10. Fahrzeugsitzstruktur nach Anspruch 1,
wobei die Haftfläche (522) einen die Flächenrichtung ändernden Teil (522B, 522C) aufweist, der derart ausgelegt ist, dass sich eine Richtung entlang der Haftfläche (522) in eine Schnittrichtung ändert, die die Haftfläche (522) schneidet.

11. Fahrzeugsitzstruktur nach Anspruch 1,
wobei das strömungswegbildende Element (52) einen erhöhten Teil (526) aufweist, der auf einer gegenüberliegenden Seite des ersten vertieften Teils (523) über die Haftfläche (522) hinweg positioniert ist, und entlang der Längsrichtung der Haftfläche (522) erhöht ist.

12. Herstellungsverfahren für die Fahrzeugsitzstruktur nach Anspruch 1, das Herstellungsverfahren umfassend:
einen Schritt des Übertragens einer Detektionswelle zum Erkennen der Haftfläche (522) in Richtung des strömungswegbildenden Elements (52);
einen Schritt des Empfangens der von dem strömungswegbildenden Element (52) reflektierten Detektionswelle;
einen Schritt des Erzeugens von Haftflächeninformationen, einschließlich einer Position und einer Form der Haftfläche (522), auf der Grundlage einer Änderung der Wellenform der empfangenen Detektionswelle; und
einen Schritt des Aufbringens eines Haftmittels auf die Haftfläche (522) auf der Grundlage der erzeugten Haftflächeninformationen.

13. Programm, das eine Vorrichtung für das Auftragen (71) des Haftmittels veranlasst, das Herstellungsverfahren für die Fahrzeugsitzstruktur gemäß Anspruch 12 auszuführen.

## Revendications

1. Structure de siège de véhicule, comprenant :
un appareil souffleur (34) qui conditionne l'air autour d'une surface d'assise d'un siège de véhicule (1) ;
un élément de formation de trajet d'écoulement (52) qui forme un trajet d'écoulement (521) qui fait circuler l'air entre la surface d'assise et l'appareil soufflant (34) ; et
un matériau de revêtement (53) qui adhère à l'élément de formation de trajet d'écoulement (52) et recouvre une partie d'ouverture du trajet d'écoulement (521),
l'élément de formation de trajet d'écoulement (52) comportant :
une surface d'adhésion (522) à laquelle le matériau de revêtement (53) adhère via une couche d'adhésion (54) formée par un agent adhésif ; et
une première partie évidée (523) positionnée entre le trajet d'écoulement (521) et la surface d'adhésion (522) et disposée de manière à être adjacente à la surface d'adhésion (522) ;
**caractérisée en ce que** :
la surface d'adhésion (522) et la première partie évidée (523) s'étendent de manière à entourer la partie d'ouverture du trajet d'écoulement (521) ; et
un centre dans une section transversale de la couche d'adhésion (54) dans un sens de la largeur est positionné entre les deux parties d'extrémité de la surface d'adhésion (522) dans un sens de la largeur.

2. Structure de siège de véhicule selon la revendication 1,
dans laquelle l'élément de formation de trajet d'écoulement (52) présente une seconde partie évidée (524), la seconde partie évidée (524) étant positionnée sur un côté opposé à la première partie évidée (523) à travers la surface d'adhésion (522), disposée de manière à être adjacente à la surface d'adhésion (522) et s'étendant de manière à entourer la partie d'ouverture du trajet d'écoulement (521).

3. Structure de siège de véhicule selon la revendication 2,
dans laquelle le centre de la couche d'adhésion (54) est positionné au centre de la surface d'adhésion (522) entre la première partie évidée (523) et la seconde partie évidée (524) dans le sens de la largeur.

4. Structure de siège de véhicule selon la revendication 2,
dans laquelle le matériau de revêtement (53) présente une partie de couplage (53A) couplée à l'appareil souffleur (34), et
dans laquelle une paroi latérale externe de la première partie évidée (523) positionnée sur le côté surface d'adhésion (522) de la première partie évidée (523) présente une première partie incurvée (523A) incurvée de manière à entourer la partie de couplage (53A) du matériau de revêtement (53).

5. Structure de siège de véhicule selon la revendication 4,
dans laquelle une paroi latérale interne de la seconde partie évidée (524) positionnée sur le côté surface d'adhésion (522) de la seconde partie évidée (524) présente, dans une position correspondant à la première partie incurvée (523A), une seconde partie incurvée (524A) incurvée de manière à entourer la partie de couplage (53A) du matériau de revêtement (53), et
dans laquelle l'élément de formation de trajet d'écoulement (52) présente une partie surélevée (526) positionnée sur un côté opposé à la surface d'adhésion (522) à travers la seconde partie évidée (524) et surélevée le long de la seconde partie incurvée (524A) .

6. Structure de siège de véhicule selon la revendication 5,
dans laquelle la paroi latérale externe de la première partie évidée (523) présente une première partie droite (523B, 523C) qui s'étend de manière droite lorsqu'elle est vue depuis une direction d'intersection qui croise la surface d'adhésion (522), dans laquelle la paroi latérale interne de la seconde partie évidée (524) présente une seconde partie droite (524B, 524C) qui est disposée dans une position correspondant à la première partie droite (523B, 523C) et s'étend de manière droite lorsqu'elle est vue depuis la direction d'intersection, et
dans laquelle la surface d'adhésion (522) présente une partie de changement de direction de surface positionnée entre la première partie droite (523B, 523C) et la seconde partie droite (524B, 524C) et configurée de telle sorte qu'une direction le long de la surface d'adhésion (522) change pour la direction d'intersection.

7. Structure de siège de véhicule selon la revendication 2,
dans laquelle une paroi latérale externe de la première partie évidée (523) positionnée sur le côté surface d'adhésion (522) de la première partie évitée (523) présente une première partie droite (523B, 523C) qui s'étend de manière droite lorsqu'elle est vue depuis une direction d'intersection qui croise la surface d'adhésion (522),
dans laquelle une paroi latérale interne de la seconde partie évidée (524) positionnée sur le côté surface d'adhésion (522) de la seconde partie évidée (524) présente une seconde partie droite (524B, 524C) qui est dans une position correspondant à la première partie droite (523B, 523C) et s'étend de manière droite lorsqu'elle est vue depuis la direction d'intersection,
dans laquelle la surface d'adhésion (522) présente une partie de changement de direction de surface (522B, 522C) positionnée entre la première partie droite (523B, 523C) et la seconde partie droite (524B, 524C) et configurée de telle sorte qu'une direction le long de la surface d'adhésion (522) change pour la direction d'intersection, et
dans laquelle la partie de changement de direction de surface (522B, 522C) présente une partie qui fait saillie ou est évidée dans la direction d'intersection.

8. Structure de siège de véhicule selon la revendication 7,
dans laquelle la partie de changement de direction de surface (522B, 522C) comporte :
une première partie de changement de direction de surface (C3) qui fait saillie sur un côté de la direction d'intersection et
une seconde partie de changement de direction de surface (C5) qui est disposée de manière à être adjacente à la première partie de changement de direction de surface et fait saillie sur un autre côté de la direction d'intersection.

9. Structure de siège de véhicule selon la revendication 2,
dans laquelle le matériau de revêtement (53) est amené à adhérer à la surface d'adhésion (522) de telle sorte qu'une forme externe du matériau de revêtement (53) est positionnée entre une paroi latérale interne dans la seconde partie évidée (524) positionnée du côté surface d'adhésion (522) et une paroi latérale externe dans la seconde partie évidée (524) positionnée sur un côté opposé à la surface d'adhésion (522).

10. Structure de siège de véhicule selon la revendication 1,
dans laquelle la surface d'adhésion (522) présente une partie de changement de direction de surface (522B, 522C) configurée de telle sorte qu'une direction le long de la surface d'adhésion (522) change pour une direction d'intersection qui croise la surface d'adhésion (522).

11. Structure de siège de véhicule selon la revendication 1,
dans laquelle l'élément de formation de trajet d'écoulement (52) présente une partie surélevée (526) positionnée sur un côté opposé à la première partie évidée (523) à travers la surface d'adhésion (522) et surélevée le long d'une direction longitudinale de la surface d'adhésion (522).

12. Procédé de fabrication de la structure de siège de véhicule selon la revendication 1, le procédé de fabrication comprenant :
une étape de transmission d'une onde de détection pour détecter la surface d'adhésion (522) vers l'élément de formation de trajet d'écoulement (52) ;
une étape de réception de l'onde de détection réfléchie par l'élément de formation de trajet d'écoulement (52) ;
une étape de génération d'informations de surface d'adhésion comportant une position et une forme de la surface d'adhésion (522) sur la base d'un changement de forme d'onde de l'onde de détection reçue ; et
une étape d'application d'un agent adhésif sur la surface d'adhésion (522) sur la base des informations de surface d'adhésion générées.

13. Programme pour amener un appareil d'application (71) de l'agent adhésif à exécuter le procédé de fabrication de la structure de siège de véhicule selon la revendication 12.
